# EUROPEAN PATENT APPLICATION

(11) **EP 2 130 637 A1**
(43) Date of publication of application: **09.12.2009**
(21) Application number: 09007153.1
(22) Date of filing: 28.05.2009
(51) Int. Cl.: B23K 26/00, B23K 26/02, B23K 26/14, B23K 26/24, B23K 26/32, B29C 65/00, B29C 65/16, B23K 101/18

(54) **Method of producing sheet joined body using blown gas against the sheets and laser light**

(30) Priority: 02.06.2008 JP 2008144492
(71) Applicant: Nitto Denko Corporation, Ibaraki-shi, Osaka 567-8680 (JP)
(72) Inventor: Matsuo, Naoyuki, Ibaraki-shi Osaka 567-8680 (JP)
(74) Representative: Stolmár, Matthias

(57) **Abstract**

The present invention relates to a method of producing a sheet joined body, the method enabling an improvement in productivity of the sheet joined body. The method of producing a sheet joined body according to the present invention includes blowing gas (70) against sheet members (10,11) so as to bring the sheet members (10,11) into tight contact with each other to form tight contact parts and, at the same time, irradiating the tight contact parts with laser light (5) to join the sheet members (10,11) with each other, thereby producing a sheet joined body.

## Description

### CROSS REFERENCE TO RELATED APPLICATION

This application claims priority from Japanese Patent Application No. 2008-144492, which is incorporated herein by reference.

### BACKGROUND OF THE INVENTION

### 1. Field of the Invention

The present invention relates to a method of producing a sheet joined body, and particularly, to a method of producing a sheet joined body by abutting sheet members to each other, irradiating the abutted part with laser light, thereby joining the sheet members with each other to manufacture a sheet joined body.

### 2. Description of the Related Art

Conventionally, a laser welding method has been used as a method of producing a sheet joined body, the method involving joining sheet members with each other to manufacture a sheet joined body.

The laser welding method is a method in which sheet members are abutted to each other, the abutted part is then irradiated with laser light to make the abutted part absorb and accumulate energy of the laser light, and heating and melting the abutted part by this energy to join the sheet members together by welding, to thereby produce a sheet joined body.

When an interface between the sheet members is irradiated with laser light in such a condition that these sheets are insufficiently brought into tight contact with each other, these sheet members are insufficiently joined to each other by welding and therefore there is a fear that a sheet joined body having insufficient joint strength between the sheet members may be formed.

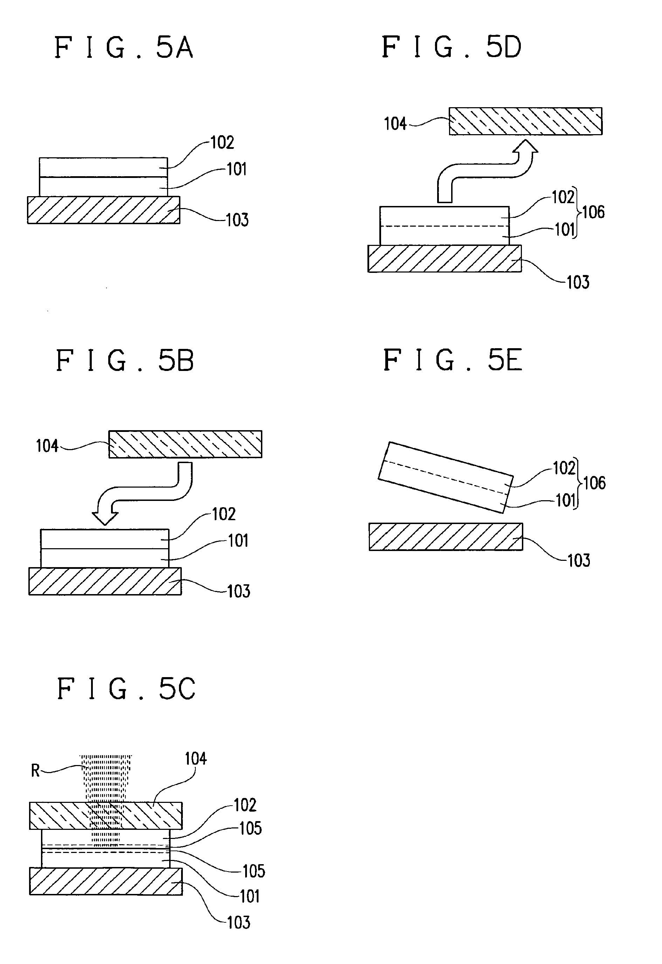

In view of the above, a method of producing a sheet joined body is proposed in which the abutted sheet members to be brought into tight contact with each other is irradiated with laser light while these sheet members are pressed by a pressure fixing tool such as a transparent glass plate (for example, Japanese Unexamined Patent Publication No. Sho-62-142092).
In such a conventional method of producing a sheet joined body, a preparation step is carried out in which, for example, firstly, a first sheet member 101 is laid on an upper surface of a stage 103 and a second sheet member 102 is superposed on the first sheet member 101 as shown in FIG. 5A.
Next, as shown in FIG. 5B, a mounting step is carried out in which a transparent glass plate 104 is mounted on an upper part of the sheet member 102.
Then, as shown in FIG. 5C, a joining step is carried out in which the sheet members 101 and 102 are brought into tight contact with each other and the second sheet member 102 is pressed downward by using the transparent glass plate 104 so as to form tight contact parts 105 and in this condition, the tight contact parts are irradiated with laser light R to join these sheet members 101 and 102, thereby manufacturing a sheet joined body.
Thereafter, the pressure applied to the second sheet member 102 by the transparent glass plate 104 is released to take out the produced sheet joined body and further, as shown in FIG. 5D, a detaching step is carried out in which the glass plate 104 is detached from the sheet joined body 106.
Then, as shown in FIG. 5E, a takeout step is carried out in which the sheet joined body 106 is taken out.

### SUMMARY OF THE INVENTION

However, a conventional method of producing a sheet joined body poses a problem that when sheet joined bodies are continuously produced, a long period of time is required to carry out a mounting step of mounting a pressure fixing tool such as a transparent glass plate on an upper part of a sheet member and a detaching step of detaching a pressure fixing tool from the sheet joined body, resulting in low productivity. Moreover, the pressure fixing tool is deteriorated when it is used for a long term, giving rise to a problem that the pressure fixing tool is an expendable supply.

It is an object of the present invention to provide a method of producing a sheet joined body, the method enabling an improvement in productivity of a sheet joined body.

According to the present invention, there is provided a method of producing a sheet joined body that includes blowing gas against sheet members so as to bring the sheet members into tight contact with each other to thereby form tight contact parts and, at the same time, irradiating the tight contact parts with laser light to join these sheet members with each other, thereby producing a sheet joined body.

With the method of producing such a sheet joined body, the method includes blowing gas to sheet members so as to bring the sheet members into tight contact with each other to thereby form the tight contact parts and, at the same time, irradiating the tight contact parts with laser light to join these sheet members with each other. As a result, laser welding can be started more quickly since the sheet members can be brought into tight contact with each other without performing the mounting step carried out in the conventional method of producing a sheet joined body. Moreover, after the laser welding is finished, a sheet joined body can be taken out more promptly without the necessity to perform the detaching step carried out in the conventional method of producing a sheet joined body.

Moreover, in the method of producing a sheet joined body according to the present invention, the tight contact part of at least one of the sheet members preferably contains a thermoplastic resin.

According to such a method of producing a sheet joined body, the tight contact part of at least one of the sheet members contains a thermoplastic resin and therefore, the tight contact part containing a thermoplastic resin can be heated and melted by laser light. Therefore, this method has an advantage that the sheet members can be directly joined with each other without the joining member containing a thermoplastic resin. Moreover, when the above joining member is used, the tight contact part containing a thermoplastic resin can also be heated and melted and therefore, this method has an advantage that a sheet joined body with sheet members having higher joint strength can be formed.

Further, in the method of producing a sheet joined body according to the present invention, air compressed by a compressor is preferably used as the gas.

According to such a method of producing a sheet joined body, there is an advantage that the tight contact parts can be formed using simple equipment such as a compressor and a pipe feeding the air compressed by the compressor, without using complicated equipment such as a pressure fixing tool and machines for operating the pressure fixing tool which are used in the conventional method for producing a sheet joined body.

As mentioned above, the method of producing a sheet joined body according to the present invention enables an improvement in productivity of the sheet joined body.

### BRIEF DESCRIPTIONS OF THE DRAWINGS

FIGS. 1A to 1C are front views showing a method of producing a sheet joined body according to an embodiment: where FIG. 1A is a preparation step, FIG. 1B is a joining step, and FIG. 1C is a takeout step;
FIG. 2 is a side view showing a method of producing a sheet joined body according to an embodiment;
FIG. 3 is a side view showing a method of producing a sheet joined body according to an embodiment;
FIG. 4 is a front view showing a method of producing a sheet joined body according to Example 1; and
FIGS. 5A to 5E are front views showing a method of producing a sheet joined body according to related art.

### DESCRIPTION OF THE PREFERRED EMBODIMENTS

Hereinafter, an embodiment according to the present invention will be described with reference to the attached drawings.

A method of producing a sheet joined body in the present embodiment involves carrying out a preparation step of applying sheet members to each other on a stage, a joining step of blowing gas against the sheet members so as to bring the sheet members into tight contact with each other to form tight contact parts and, at the same time, irradiating the tight contact parts with laser light to join these sheet members with each other, and a takeout step of taking out the sheet joined body.

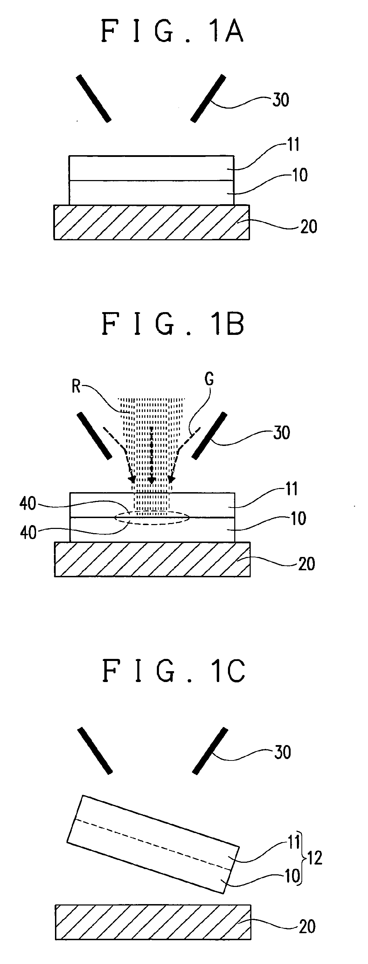

In the preparation step, a first sheet member 10 is mounted on a center of an upper surface of a stage 20 and a second sheet member 11 is further mounted on the first sheet member 10 to superpose the first and second sheet members 10 and 11 on each other, as shown in FIG. 1A.

In the joining step, as shown in FIG. 1B, gas G is blown against the second sheet member 11 from above the second sheet member 11 so as to bring the first sheet member 10 into tight contact with the second sheet member 11 to form tight contact parts 40 and, at the same time, the tight contact parts 40 are irradiated with laser light. Then, applied laser light R is made to reach the tight contact parts 40 to convert the light energy into heat energy at these tight contact parts to join the first sheet member 10 to the second sheet member 11 by welding.

The second sheet member 11 has light transmittance for the laser light R and the first sheet member 10 has a photo-absorption ability of absorbing the laser light R. These characteristics bring about such a situation that in the joining step, the laser light R applied to the tight contact parts 40 is made to pass through the second sheet member 11 and then to reach a surface of the first sheet member 10 (surface on a side which is in contact with the second sheet member 11), that is, the tight contact parts 40 to convert the light energy into heat energy, thereby making it possible to join the first sheet member 10 with the second sheet member 11 by welding.
It is to be noted that the first sheet member 10 unnecessarily has the photo-absorption ability of absorbing the laser light R. When the first sheet member 10 does not absorb the laser light R or insufficiently absorbs the laser light R, the present invention may be embodied in a form in which a photo-absorbing agent is interposed between the first sheet member 10 and the second sheet member 11, and the photo-absorbing agent is irradiated with the laser light R to heat the photo-absorbing agent, thereby joining the fist sheet member 10 to the second sheet member 11 by welding.

A direction of the gas G to be blown is determined by a guide section 30.
Although there is no particular limitation to the guide section 30 insofar as it determines the direction of the gas G to be blown, a nozzle is given as an example of the guide section 30.
Although no particular limitation is imposed on a shape of a blow-off opening of the nozzle, a circular shape and a square shape are given as examples as the shape of the opening.

No particular limitation is imposed on the direction of the gas G to be blown against the surface of the second sheet member 11 insofar as the direction is within a range where the sheet members 10 and 11 can be brought into tight contact with each other to form tight contact parts. However, although there is no intention to impose limitation, the gas G is preferably blown such that the direction of the gas G to be blown is perpendicular to a surface of the second sheet member 11 from a viewpoint of enabling the sheet members 10 and 11 to be brought into tight contact with each other while efficiently utilizing the gas G to be blown.

An axis of the direction of the gas G to be blown and an axis of the direction of the laser light R to be applied may be the same or not insofar as the sheet members can be joined to each other by welding to form a sheet joined body.
However, the axis of the direction of the gas G to be blown and the axis of the direction of the laser light R to be applied are preferably the same from a viewpoint of easily applying the laser light R to the tight contact parts formed by the gas G.

A gauge pressure of the gas G is preferably not less than 0.01 MPa and less than 5 MPa and more preferably not less than 0.1 MPa and less than 2 MPa, although depending on the size of gas blow-off opening, the distance from a leading end of the gas blow-off opening to a part against which gas is blown, the direction of the gas G to be blown against the surface of the second sheet member 11, materials of the first sheet member 10 and second sheet member 11 and the intensity of the laser light R to be applied.
Since the pressure is not less than 0.01 MPa, the present embodiment has an advantage that the first sheet member 10 and the second sheet member 11 can be brought into tight contact with each other more firmly, which can promote the welding. Moreover, since the pressure is less than 5 MPa, the sheet members can be prevented from being fluttered by the pressure of the gas and therefore, the present embodiment has an advantage that the sheet members are easily secured at a set position.

As a method of blowing gas, to the extent that the effect of the present invention is not impaired, a method of blowing assist gas which is used to scatter decomposed materials generated in a laser cutting operation may be adopted.

In the method of producing a sheet joined body according to the present embodiment, the gas G is blown as mentioned above, so that the sheet members 10 and 11 can be brought into tight contact with each other to form the tight contact parts 40 without performing the step of mounting a pressure fixing tool which step is carried out in a conventional method of producing a joint sheet, making it possible to start laser welding more promptly.

The blowing of the gas G may be released just after the irradiation with a laser is released or a short while after the irradiation with the laser light R is stopped.
The blowing of the gas G is preferably released a short while after the irradiation with the laser light R is stopped and more preferably released after the sheet members are joined from a viewpoint of rapidly cooling the sheet members melted under heating by irradiation with the laser light R to thereby be able to rapidly join the sheet members with each other.

Although the pressure of the gas after the laser irradiation is released may be the same as the pressure of the gas when the laser is applied, the pressure of the gas is preferably larger than the pressure of the gas when the laser is applied as long as it is within a range in which the formed sheet joined body is not blown away, from a viewpoint of rapidly cooling the sheet members melted under heating by irradiation with the laser light R to thereby be able to rapidly join the sheet members with each other.

No particular limitation is imposed on a method of applying the laser light R in the joining step, and for example, a method in which a spot beam is moved at a predetermined speed for scanning, and a method in which a spot beam is fixed in position and the stage 20 itself is moved at a predetermined speed for the relative movement of the spot beam.

In the joining step, the laser light R is applied such that the laser light R transmits an upper portion of the second sheet member 11 against which the gas G is blown.
When scanning with the laser light R, it is preferred that the scanning is performed together with the gas G.
The leading end of the guide section 30 is positioned in any direction with respect to the scanning direction of the laser light R, and a case where the leading end of the guide section 30 is positioned on a front side or a backside of the scanning direction of the laser light R is given as examples.

In the takeout step, a sheet joined body 12 is taken out after the laser irradiation and the gas blowing are finished as shown in FIG. 1C.
In the takeout step, the sheet joined body can be taken out promptly after the joining step without performing a step of detaching a pressure fixing tool from the sheet members which step is performed in the conventional method of producing a sheet joined body.

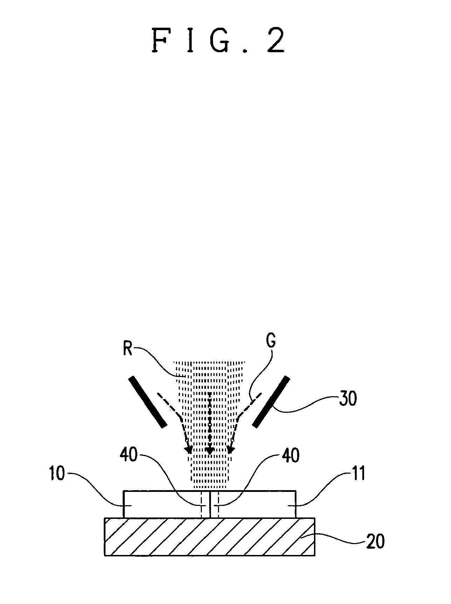

In the above embodiment, the first sheet member 10 and the second sheet member 11 are overlapped on each other as shown in FIGS. 1A to 1C. However, the present invention is not limited thereto and, for example, an end of the first sheet member 10 and an end of the second sheet member 11 may be abutted against each other as shown in FIG. 2.

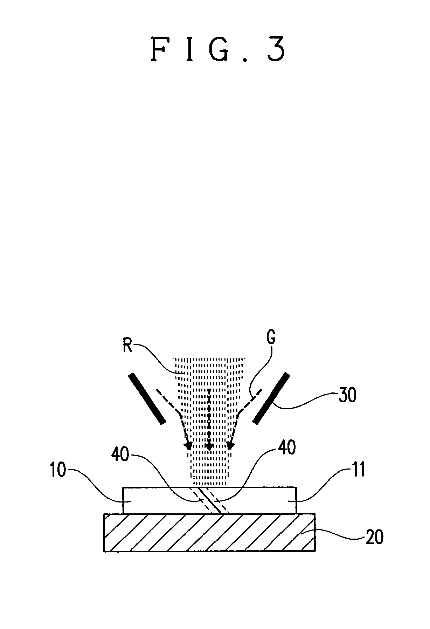

When the end of the first sheet member 10 and the end of the second member are abutted against each other to produce a sheet joined body in the above manner, no particular limitation is imposed on the shape of the end of the sheet member 10 and on the shape of the end of the second sheet member 11 insofar as these shapes are those allowing the end of the first sheet member 10 and the end of the second sheet member 11 to be abutted against each other. End surfaces of these sheet members may be, as shown in FIG. 2, a plane perpendicular to or, as shown in FIG. 3, a plane inclined with the surface against which the gas is blown.
In this case, at least one of the first sheet member 10 and second sheet member 11 preferably has the photo-absorbing ability of absorbing the laser light. When one of these sheet members has the photo-absorbing ability of absorbing the laser light, it is preferable to apply the laser to the entire surface of the part where the sheet member having photo-absorbing ability is abutted from a viewpoint that the entire surface of the abutted part is easily joined by welding.
When neither of these sheet members has the photo-absorbing ability of absorbing the laser light or sufficiently absorbs the laser light, a photo-absorbing agent may be interposed between the first sheet member 10 and the second sheet member 11 and irradiated with the laser light to heat the photo-absorbing agent, thereby joining these sheet members to each other by welding.

In the above embodiment, the sheet members are secured to each other by the gas blowing. In the present invention, the sheet members may be secured by sucking a sheet member from the stage side in addition to the above gas blowing.
Any method may be used as the method of sucking a sheet member from the stage side without any particular limitation insofar as it is a method of securing the sheet member to the extent that the effect of the present invention is not impaired. Examples of these methods include a method in which a sheet member is sucked from an opening formed on the stage part which is held in contact with the sheet member.
The number of the openings formed on the stage may be one or two or more.
Although there is no particular limitation to the shape of the opening, a circular shape and a square shape are exemplified.
The sucking of the sheet member from the stage side has an advantage that the fluttering of the sheet member caused by the blowing of gas scarcely occurs.

The first sheet member 10 and the second sheet member 11 to be used in the method of producing a sheet joined body in the present embodiment may have any of a monolayer structure or a laminate structure without any particular limitation.

Examples of these sheet members which may be adopted in the present invention include polymer sheets using one or more of thermoplastic resins such as a polyethylene resin (PE), polypropylene resin (PP) and polyethylene terephthalate resin (PET), heat-curable resins such as an epoxy resin (EP) and phenol formaldehyde resin (PF), natural rubber (NR) and rubber such as an ethylenepropylenedien ternary copolymer (EPDM); woven fabrics or nonwoven fabrics formed by synthetic fibers, natural fibers and blended fibers constituted of these fibers; or composite sheets of these materials.

In the present invention, sheet members, at least one of which is provided with the tight contact part containing a thermoplastic resin, are used. Alternatively, a joining member containing a thermoplastic resin is interposed between the tight contact parts. Alternatively, when the sheet members are abutted against each other, the tight contact parts are coated with a joining member containing a thermoplastic resin. In this manner, the sheet members can be joined by welding at the tight contact parts with laser light in the present invention.

Even in a case of using this joining member, it is preferable to use sheet members, at least one of which has the tight contact part containing a thermoplastic resin. If the tight contact part of at least one of the sheet members contains a thermoplastic resin, there is an advantage that a sheet joined body having a higher joint strength between the sheet members can be formed.

When the surface of one of the sheet members is formed of a material such as a metal material which is substantially scarcely softened by heat, at least the surface to be joined by welding is preferably roughened. This produces such an effect that when another sheet member is made of a thermoplastic resin or a joining member containing a thermoplastic resin is used, and the thermoplastic resin is softened by laser light, the softened thermoplastic resin is flowed into the irregular surface of the metal material, enabling a development of high joint strength by an anchoring effect. Further, the thermoplastic resin in the resin layer can be softened owing to the high thermal conductivity of the metal material, producing such an effect that the welding can be carried out in a wide range by the thermoplastic resin of the softened resin layer.

A thickness of the sheet member to be used for the first and second sheet members 10 and 11 is preferably not more than 200 µm.

The first sheet member 10 and the second sheet member 11 are not necessarily the same but may be different in the material of the sheet member, laminate structure, thickness and the like.
The present embodiment shows an example using two sheet members typified by the first sheet member 10 and the second sheet member 11. However, three or more sheet members may be joined to manufacture a sheet joined body in the present invention.
Moreover, one end of the sheet member may be joined with the other end of the same sheet member to produce an annular sheet joined body in the present invention.

Any laser light may be used as the above laser light without any particular limitation insofar as the laser light can join the sheet members to each other by welding. As the laser light, those obtained by various oscillation means such as semiconductor laser, Nd-YAG laser and fiber laser may be adopted. In addition, as an oscillation method, so-called CW laser (Continuous Wave Laser) in which laser light is continuously applied and pulse laser such as a femto-second-laser may be adopted.
Among these lasers, the semiconductor laser and the fiber laser are preferable from a viewpoint of obtaining in-plane uniform beam intensity with ease.
A wavelength of the laser light is preferably in a near-infrared region from a viewpoint that many resin materials have high transmittance for the laser light having such a wavelength, the laser light is easily made to reach an interface of the sheet members, and the sheet members can be joined to each other by welding at the interface without exerting an adverse influence on the front side of the sheet member.

Examples of the photo-absorbing agent used to absorb the laser light include pigments using porphyrin type compounds, dyes and carbon black.

Although no particular limitation is imposed on the type of gas insofar as the gas enables the sheet members to be brought into tight contact with each other at the interface between the sheet members, examples of the type of gas may include gases such as air, nitrogen, oxygen and inert gases.
It is to be noted that the above gas is different from the assist gas for which gases such as helium having a light weight are preferably used from a viewpoint that decomposed products generated in the cutting operation are easily scattered.

As the above gas, air compressed by a compressor is preferably used. The use of the air compressed by a compressor as the gas has an advantage that the above-described tight contact parts can be formed using simple equipment such as a compressor and pipes for feeding the compressed air.

Although not described in detail herein, technical particulars relative to conventionally known methods of producing a sheet joined body and sheet joined bodies may be adopted in the method of producing a sheet joined body and sheet joined body according to the present invention to such an extent that the effect of the present invention is not impaired.

### EXAMPLES

The present invention will be described in more detail by way of examples, however, the present invention is not limited thereto.

### (Example 1)

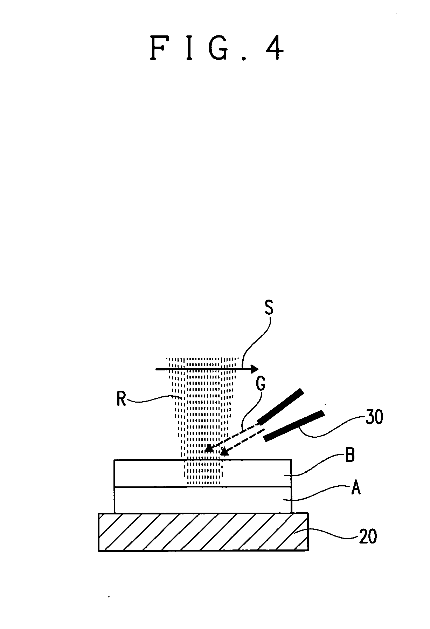

As shown in FIG. 4, the following sheet member A was mounted on the upper surface of a stage 20 and the end of the following sheet member B was further mounted on the end of the sheet member A to superpose the sheet member A on the sheet member B. A photo-absorbing agent was applied to the interface between the sheet members A and B to improve the ability of absorbing the laser light.
Gas G having a gauge pressure of 0.15 MPa was blown from the following nozzle 30 against the upper part of the sheet member B superposed on the sheet member A such that the both sheet members were brought into tight contact with each other and at the same time, the part against which the gas was blown was irradiated with laser light R having a spot diameter of 2 mmφ by using a laser light irradiation device so as to make the laser light R transmit the part to manufacture a sheet joined body.
In this case, the gas G was blown such that the distance from a leading end of the nozzle 30 to the part against which gas was blown was 30 mm. Moreover, air compressed by a compressor was used as the gas G. Further, the gas G was blown such that the pressure applied to the part of the sheet member B against which the gas G was blown was 0.15 MPa in order to form tight contact parts by bringing the sheet members A and B into tight contact with each other. Moreover, the laser light R was applied such that the laser light R transmits the part of the sheet member B against which the gas G was blown. When the laser light R was applied, the part against which the gas G was blown was scanned by moving the emitting opening of the laser light R and the leading end of the nozzle 30 at a scanning speed of 100 mm/s. At this time, the emitting opening of the laser light R and the leading end of the nozzle 30 were moved by scanning while the leading end of the nozzle 30 is positioned ahead of the emitting opening in a scanning direction S.

### <Materials to be used>

- Sheet member A: Polyethylene terephthalate resin (PET) sheet material (50 mm (length) × 50 mm (width) × 50 µm (thickness))
- Sheet member B: Polyethylene terephthalate resin (PET) sheet material (50 mm (length) × 50 mm (width) × 50 µm (thickness))

### <Laser light irradiation device>

- Laser light source: Semiconductor laser
- Wavelength of laser light: 940 nm
- Power: 20 W
- Spot diameter of the laser light: 2 mmφ

### <Nozzle>

- Blowing nozzle diameter: 5 mmφ

A tensile test was made to examine the joint strength between the sheet members A and B, to find that the joint strength was 50 N/cm.
In addition, since the abutted sheet members A and B on the stage could be brought into tight contact with each other quickly, the laser welding could be started promptly. Further, after the laser welding was finished, the produced sheet joined body could be taken out promptly from the surface of the stage.

### (Comparative Example 1)

An attempt was made to manufacture a sheet joined body in the same manner as in the case of the sheet joined body of Example 1 except that no gas was blown.
The sheet member A was scarcely joined with the sheet member B and therefore, no sheet joined body could be manufactured.

### (Comparative Example 2)

An attempt was made to manufacture a sheet joined body in the same manner as in the case of the sheet joined body of Example 1 except that gas was blown under a pressure lower than the range within which the sheet members could be brought into tight contact with each other, specifically, under a gauge pressure of 0.005 MPa.
The sheet member A was scarcely joined with the sheet member B and therefore, no sheet joined body could be manufactured.
Specifically, the method of Comparative Example 2 in which laser light was applied with blowing gas under a pressure lower than the range within which the sheet members could be brought into tight contact with each other failed to produce a sheet joined body.

### (Comparative Example 3)

An attempt was made to manufacture a sheet joined body in the same manner as in the case of the sheet joined body of Example 1 except that gas was blown under a pressure higher than the range within which the sheet members could be brought into tight contact with each other, specifically, under a gauge pressure of 5 MPa.
The sheet member A was scarcely joined with the sheet member B and therefore, no sheet joined body could be manufactured.
Specifically, the method of Comparative Example 3 in which laser light was applied with blowing gas under a pressure higher than the range within which the sheet members could be brought into tight contact with each other failed to produce a sheet joined body because the pressure of gas causes the sheet members to flutter so that the sheet members could not be secured at the set position.

### (Comparative Example 4)

A sheet joined body of Comparative Example 4 was manufactured in the same manner as in the case of the sheet joined body of Example 1 except that a transparent glass plate was used instead of bringing the sheet members into tight contact with each other by using gas.
Specifically, firstly, the sheet member A was mounted on the upper surface of the stage and the end of the following sheet member B was mounted on the end of the sheet member A to superpose the sheet members A and B on each other. A transparent glass plate was then mounted on the upper part of the sheet member B. Thereafter, laser light was applied to the superposed part with pressing the transparent glass plate against the sheet member B such that the pressure applied to the upper part of the sheet member B was 0.15 MPa. Subsequently, the pressure of the glass plate against the sheet member B was released to detach the sheet member from the glass plate, thereby manufacturing a sheet joined body.

A tensile test was made to examine the joint strength between the sheet members A and B, to find that the joint strength was 50 N/cm.
However, in the method of producing a sheet joined body in Comparative Example 4, much time was taken to carry out the step of mounting a transparent glass plate on the upper part of the sheet member B and the step of detaching the glass plate from the sheet member B.
In other words, it was shown that time required for a production process was longer in the method of producing a sheet joined body in Comparative Example 4 in which the sheet members were brought into tight contact with each other by using a transparent glass plate compared to the method of producing a sheet joined body in Example 1 in which the sheet members were brought into tight contact with each other by using gas.

This specification is by no means intended to restrict the present invention to the preferred embodiments set forth therein. Various modifications to the method of producing the sheet joined body, as described herein, may be made by those skilled in the art without departing from the spirit and scope of the present invention as defined in the appended claims.

## Claims

1. A method of producing a sheet joined body, which comprises:
blowing gas against sheet members so as to bring the sheet members into tight contact with each other to thereby form tight contact parts; and, at the same time,
irradiating the tight contact parts with laser light to join the sheet members with each other, thereby producing a sheet joined body.

2. A method of producing a sheet joined body according to claim 1, wherein the tight contact part of at least one of the sheet members contains a thermoplastic resin.

3. A method of producing a sheet joined body according to any one of claims 1 and 2, wherein air compressed by a compressor is used as the gas.
